# EUROPÄISCHE PATENTSCHRIFT

(11) **EP 1 917 699 B1**
(45) Veröffentlichungstag und Bekanntmachung des Hinweises auf die Patenterteilung: **05.03.2014**
(21) Anmeldenummer: 06764016.9
(22) Anmeldetag: 03.07.2006
(51) Int. Cl.: H01Q 7/00, H01Q 9/28, H01Q 1/22, G01V 3/165, G01V 3/17

(54) **MECHANISCHE TRÄGEREINRICHTUNG SOWIE MESSGERÄT MIT EINER MECHANISCHEN TRÄGEREINRICHTUNG**
MECHANICAL SUPPORT DEVICE AND MEASURING DEVICE COMPRISING A MECHANICAL SUPPORT DEVICE
DISPOSITIF DE SUPPORT MECANIQUE ET APPAREIL DE MESURE MUNI D'UN DISPOSITIF DE SUPPORT MECANIQUE

(30) Priorität: 17.08.2005 DE 102005039152
(43) Veröffentlichungstag der Anmeldung: 07.05.2008
(73) Patentinhaber: ROBERT BOSCH GMBH, 70442 Stuttgart (DE)
(72) Erfinder: SCHMIDT, Ewald, 71634 Ludwigsburg (DE); SKULTETY-BETZ, Uwe, 70771 Leinfelden-Echterdingen (DE); MAHLER, Michael, 70771 Leinfelden-Echterdingen (DE); HOFFMANN, Ulli, 75223 Nieffern-Oeschelbronn (DE); KRAPF, Reiner, 72770 Reutlingen (DE); WIELAND, Christoph, 71083 Herrenberg-Kuppingen (DE)
(86) Internationale Anmeldenummer: PCT/EP2006/063802
(87) Internationale Veröffentlichungsnummer: WO 2007/020128

(56) Entgegenhaltungen:
- EP-A- 0 751 403
- WO-A-03/073133
- WO-A1-2005/078480
- WO-A1-2005/080930
- WO-A1-2005/081015
- DE-A1- 19 850 748
- DE-A1-102004 007 315
- US-A- 1 907 755
- US-A- 3 002 149
- US-A- 4 893 071
- US-A- 5 296 806
- US-A- 5 680 048
- US-A1- 2003 169 036
- US-A1- 2005 104 789
- US-B1- 6 914 552

## Beschreibung

Die Erfindung geht aus von einer mechanischen Trägereinrichtung für zumindest ein Sensorblech einer Vorrichtung zum Senden und / oder Empfangen elektromagnetischer HF-Signale, insbesondere einer HF-Antenne für eine Radareinrichtung, welche in einem Frequenzbereich von ca. 1 - 5 GHz betrieben wird.

### Stand der Technik

HF-Sensoren, wie beispielsweise Antennen, für Einrichtungen, welche zur Detektion von in einem Medium eingeschlossenen Objekten, wie Leitungen oder Rohren in Wänden, bestimmt sind, werden im Allgemeinen auf das Senden und / oder Empfangen hochfrequenter (HF) Signale, beispielsweise Radarsignale optimiert. Dazu weist eine derartige Vorrichtung zumindest ein Sensorblech eines Hochfrequenzsensors auf, welches beispielsweise als Antenne dient und in entsprechender Weise in einem Detektor fixiert ist.

Eine derartige Antenne in plannarer Ausführung ist aus der DE 10104863 A1 bekannt. Diese bekannte plannare Antenne ist mit hoher mechanischer Stabilität auf einer Leiterplatte fixiert und erzeugt ein relativ symmetrisches Richtdiagramm mit weitgehend reduzierten Nebenmaxima bzw. Nebenkeulen. Die Antenne besteht aus einer elektrisch leitenden Platte, welche an einander gegenüber liegenden Rändern zwei abgewinkelte Seitenabschnitte aufweist, die als Leitungsarme zur Ankopplung der Antenne an ein Speisenetzwerk dienen. Darüber hinaus dienen die Seitenabschnitte der Antenne als mechanische Fixierung der plannaren Antenne auf einer Leiterplatte.

Aus der DE 10239431 A1 ist ein Ortungsgerät, insbesondere ein handgehaltenes Ortungsgerät zur Detektion von Einschlüssen, vorzugsweise in Wänden, Decken und / oder Böden bekannt, mit mindestens einer von einem Gehäuse umgebenen kapazitiven Sensorvorrichtung, wobei zumindest ein Messkondensator der kapazitiven Sensorvorrichtung eine erste Elektrode besitzt, die einen parallel zu einer Gehäusewand verlaufenden Abschnitt aufweist, der plan gegen eine Innenseite einer Gehäusewand gedrückt ist. Dazu besitzt die Vorrichtung der DE 10239431 A1 einen mechanischen Abstandshalter für die erste Elektrode, der den Abstand der Elektrode zu der Gehäusewand definiert und fixiert.

Aus der US 2003/0169036 A1 ist eine Sensoranordnung mit eine ersten Sensor und einem zweiten Sensor bekannt. Der erste Sensor der Vorrichtung der US 2003/0169036 A1 der vorzugsweise eine insbesondere nach de Wirbelstromprinzip arbeitende Messspule aufweist und der zweite Sensor sind in eine gemeinsamen Gehäuse angeordnet. In Hinblick auf eine Verminderung der Beeinflussung der Sensoren untereinander ist die Sensoranordnung derart ausgestaltet, dass auf der Messseite des Gehäuses eine Schicht ausgebildet ist, die ein aktives Bauteil des zweiten Sensors ist.

Aus der US 2005/0104789 ist eine Antennenanordnung für eine Zweifrequenzbetrieb bekannt. Dazu ist eine Patch-Antenne zur Abstrahlung einer ersten Frequenz auf der ersten Seite eines dielektrischen Substrates angeordnet. Diese Patch-Antenne ist umgeben von einer rechteckigen Spulenanordnung, welche in das dielektrische Substrat geätzt ist und der Erzeugung einer zweiten Frequenz dient.

### Vorteile der Erfindung

Die erfindungsgemäße mechanische Trägereinrichtung wird in Anspruch 1 ausgeführt.

Eine derartige Ausbildung eines mechanischen Trägerelements für zumindest ein Sensorblech bzw. ein Antennenelement eines Sensors ermöglicht die Realisierung eines Messgeräts mit Mehrfachsensorik, bei dem eine kompakte, mechanisch stabile Sensoranordnung für eine Mehrzahl von Sensoren gewährleistet ist. Eine solche Halterung, die sowohl zur mechanischen Fixierung eines Antennenelements als auch als Wickelkörper zumindest einer Spule eines induktiven Sensors dient, ermöglicht eine Kostenreduktion des Gerätes, eine vereinfachte Montage der Sensorik, sowie eine erhöhte Servicefreundlichkeit, da eine derartige Ausbildung einer mechanischen Trägereinrichtung die leichte Austauschbarkeit des Sensorkopfs des Messgeräts gewährleistet.

Messgeräte mit Mehrfachsensorik, wie sie beispielsweise zur Ortung von in einem Medium eingeschlossenen Objekten verwendet werden, besitzen eine Mehrzahl unterschiedlicher Sensoren, die im Gehäuse des Messgeräts anzuordnen sind. Bei der Ortung von in einem Medium eingeschlossenen Objekten besitzen Messgeräte mit einer Mehrfachsensorik deutliche Vorteile.

Durch die spezielle mechanische Ausgestaltung der Trägereinrichtung besitzt jeder Sensor den selben Messort, was eine genauere Aussage über das aufgefundene, detektierte Objekt ermöglicht, ohne dass die Sensoren untereinander abgeglichen oder kalibriert werden müssen.

Durch die in den abhängigen Ansprüchen aufgeführten Merkmale sind vorteilhafte Ausgestaltungen und Weiterbildungen des erfindungsgemäßen Messgeräts möglich.

In einer vorteilhaften Ausführungsform der erfindungsgemäßen Trägereinrichtung umgibt zumindest ein als Spule dienendes Leiterschleifensystem das Trägerelement in Umfangsrichtung der Trägereinrichtung. Die Spule, die Bestandteil eines induktiven Sensors eines Messgerätes ist, kann als klassische, gewickelte Spule oder aber auch beispielsweise als eine Printspule ausgebildet sein, bei der ein leitfähiges Leiterschleifensystem die Funktion der Spulenwicklungen übernimmt.

In vorteilhafter Weise sind bei der erfindungsgemäßen mechanischen Trägereinrichtung eine Mehrzahl von als Spulen dienenden Leiterschleifensystemen konzentrisch zu einer Symmetrieachse der Trägereinrichtung angeordnet.

Dabei lassen sich die Leiterschleifensysteme in axialer Richtung der Symmetrieachse, insbesondere höhenversetzt übereinander, mit definiertem Abstand anordnen.

In vorteilhafter Weise entspricht die Symmetrieachse der Trägereinrichtung und somit die Symmetrieachse der Leiterschleifensysteme des induktiven Sensors der Abstrahlungsrichtung zumindest eines Antennenelements bzw. Sensorblechs

Auf diese Weise wird für ein Messgerät mit einer derartigen, erfindungsgemäßen Trägereinrichtung eine optimale, technische Funktion realisiert, da alle Sensoren des Messgeräts denselben Messort besitzen.

In einer vorteilhaften Ausführungsform der erfindungsgemäßen Trägereinrichtung ist diese mechanisch mit einer Trägerplatine verbunden, auf der weitere elektronische Bauelemente sowie zumindest ein weiteres Sensorelement angeordnet sind.

In einer vorteilhaften Ausführungsform der erfindungsgemäßen mechanischen Trägereinrichtung ist diese derart ausgebildet, dass sie als Führungselement zumindest einer Verbindungsachse zweier Wälzkörper dient. Auf diese Weise können beispielsweise die Radachsen eines verfahrbaren Messgeräts mit Hilfe der mechanischen Trägereinrichtung für das Sensorblech geführt werden.

In vorteilhafter Weise ist die mechanische Trägereinrichtung im Wesentlichen rohrförmig, beispielsweise mit einem rechteckigen Querschnitt, ausgebildet, sodass mindestens ein Sensorblech des HF-Sensors, beispielsweise ein Antennenelement eines Hochfrequenzsensors im Innenraum der Trägereinrichtung angebracht werden kann und zumindest ein Spulenelement eines induktiven Sensors außerhalb des Innenraums angeordnet werden kann. Außerhalb dieses Innenraums der mechanischen Trägereinrichtung kann dann auch die Führung für entsprechende Achsen von Wälzkörpern des Messgerätes vorgesehen und ausgebildet sein.

Die erfindungsgemäße mechanische Trägereinrichtung ermöglicht in vorteilhafter Weise die Realisierung eines Messgeräts mit Mehrfachsensorik, bei dem durch die mechanische Gestaltung der Trägereinrichtung jeder Sensor des Messgeräts den selben Messort besitzt, was eine genauere Aussage über detektierte Objekte ermöglicht. Die Kombination von unterschiedlichen Sensorprinzipien in einem Messgerät mit Mehrfachsensorik erlaubt, neben der reinen Ortung eines eingeschlossenen Objekts, darüber hinaus eine Materialidentifikation des detekierten Objektes sowie, beispielsweise bei Elektroleitungen, die Gewinnung von Informationen über den Spannungszustand der Leitung. Darüber hinaus wird beispielsweise die Hochfrequenzortung mit Hilfe eines oder mehrerer Antennenelemente und die daraus resultierende Tiefenschätzung für ein eingeschlossene Objekt deutlich genauer, da sich die Hochfrequenzortung aufgrund der Messergebnisse der weiteren, im Messgerät vorhandenen Sensoren, auf die Materialart des detektierten Objekts einstellen kann.

Durch die erfindungsgemäße mechanische Trägereinrichtung ist die Sensorik des Messgeräts über einfache Verbindungstechniken, wie beispielsweise Löten, Stecken, Schrauben oder dergleichen in einem Messgerät zu fixieren.

Bei einem handgehaltenen, über die Oberfläche eines zu untersuchenden Mediums verfahrbaren Messgeräts können die Rad-Achsen des Messgeräts, welche beispielsweise auch einen Wegaufnehmer für das Messgerät mit einem entsprechenden Wegsignal versorgen, über die mechanische Trägereinrichtung der Sensorelemente geführt und somit stabilisiert werden.

Eine solche mechanische Trägereinrichtung, die der präzisen Anordnung diverser unterschiedlicher Sensoren, als auch als Führungselement für Radachsen eines beweglichen Messgeräts dient, ermöglicht eine kompakte, mechanisch stabile Sensoranordnung, die zudem servicefreundlich, da leicht austauschbar, ist. Mit Hilfe des erfindungsgemäßen Trägerelements lässt sich ein kompaktes Messgerät mit Mehrfachsensorik, insbesondere ein derartiges handgehaltenes Gerät realisieren, bei dem in vorteilhafter Weise die einzelnen Sensoren denselben Messort besitzen.

Weitere Vorteile der erfindungsgemäßen Trägereinrichtung bzw. des erfindungsgemäßen Messgeräts sind in den nachfolgenden Zeichnungen sowie in der zugehörigen Beschreibung offenbart.

### Zeichnung

In der Zeichnung sind einige Ausführungsbeispiele einer erfindungsgemäßen Trägereinrichtung sowie eines erfindungsgemäßen Messgeräts dargestellt, die in der nachfolgenden Beschreibung näher erläutert werden sollen. Die Figuren der Zeichnungen, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:
- Figur 1: ein Ausführungsbeispiel der erfindungsgemäßen mechanischen Trägereinrichtung in einer perspektivischen Übersichtsdarstellung,
- Figur 2: das Ausführungsbeispiel der mechanischen Trägereinrichtung gemäß Figur 1 in einer Seitenansicht,
- Figur 3: eine Aufsicht auf die mechanische Trägereinrichtung in einer vereinfachten, schematischen Darstellung,
- Figur 4: einen Schnitt entlang der Achse AA' in Figur 3 für eine weiter Ausführungsform der erfindungsgemäßen mechanischen Trägereinrichtung,
- Figur 5: ein weiteres Ausführungsbeispiel der mechanischen Trägereinrichtung in einer Schnittdarstellung entlang der Achse AA' in Figur 3,
- Figur 6: ein weiteres Ausführungsbeispiel der mechanischen Trägereinrichtung in einer schematischen Schnittdarstellung entlang der Achse AA' in Figur 3,
- Figur 7: ein weiteres Ausführungsbeispiel einer mechanischen Trägereinrichtung in einer schematisierten perspektivischen Gesamtdarstellung,

Figur 8 ein Ausführungsbeispiel für ein erfindungsgemäßes Messgerät.

### Beschreibung Ausführungsbeispiele

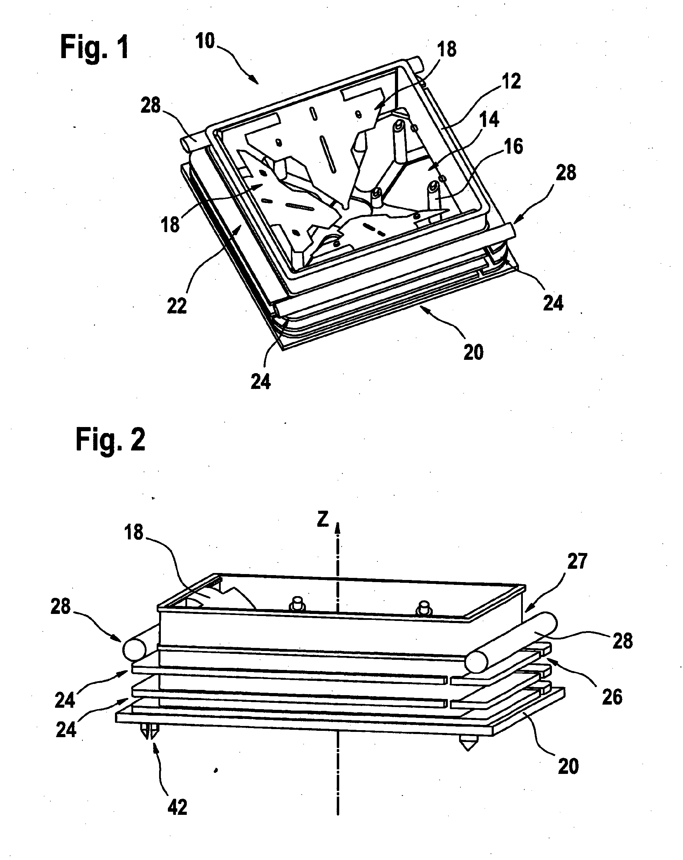

Figur 1 zeigt ein erstes Ausführungsbeispiel einer erfindungsgemäßen mechanischen Trägereinrichtung 10. Bei der Trägereinrichtung handelt es sich um einen Körper 12 aus einem nichtmetallischen Werkstoff, einen Kunststoff. Der Trägerkörper 12, der im Ausführungsbeispiels der Figuren 1 und 2 als Kunststoffkörper ausgeformt, beispielsweise in Spritzgusstechnik hergestellt ist, ist im Wesentlichen rohrförmig ausgebildet und besitzt in der dargestellten Ausführungsform einen quadratischen Querschnitt. Andere Querschnittsformen sind aber ebenso denkbar. Im Innenraum 14 des Kunststoffkörpers 12 sind Halteelemente 16 für Sensorbleche 18 der Hochfrequenzsensorik ausgeformt. Die Montage der Sensorbleche 18, die beispielsweise Antennenelemente eines Radarsensors bilden, kann über Einpressen, Einspritzen oder Einhängen mit Verpressen der Bleche an der Halterung erfolgen.

Der Kunststoffkörper 12 der mechanischen Trägereinrichtung ist auf einer Trägerplatine 20 angeordnet, beispielsweise auf dieser verklebt oder verclipst. Auf dieser Trägerplatine 20 können sich in vorteilhafter Weise weitere elektronische Bauelemente der Sensorik und insbesondere auch weitere Sensoren befmden. Zudem kann der Trägerkörper 12 mit der Trägerplatine 20 über entsprechende Kontaktmittel auch elektrisch kontaktiert sein

An seiner Außenseite 22 weist der Kunststoffkörper 12 der mechanischen Trägereinrichtung 10 eine Mehrzahl von umlaufenden, flächigen Stegen 24 auf. Die umlaufenden Stege, die in Umfangsrichtung am Kunststoffkörper 12 ausgebildet sind, weisen einen axialen Abstand in Richtung der in Figur 2 eingezeichneten Symmetrieachse Z der mechanischen Trägereinrichtung 10 auf. Die Symmetrieachse Z entspricht dabei im Wesentlichen der Abstrahlungsrichtung des durch die Sensorbleche 18 gebildeten Hochfrequenzsensors, beispielsweise eines Radarsensors.

Für eine vorgesehene induktive Sensorik eines Mehrfachmesskopfes wird die mechanischen Trägereinrichtung 10 als Wickelkörper verwendet. Bei einer derartige induktive Sensorik werden eine Mehrzahl von Spulen (Sende- bzw. Empfangsspulen) eingesetzt.

Der jeweilige Zwischenraum 26 zwischen zwei in der Höhe versetzten Stegen 24 dient bei dem beschriebenen Ausführungsbeispiel der mechanischen Trägereinrichtung als Wickelkörper für die Wicklungen einer Spule eines induktiven Sensors.

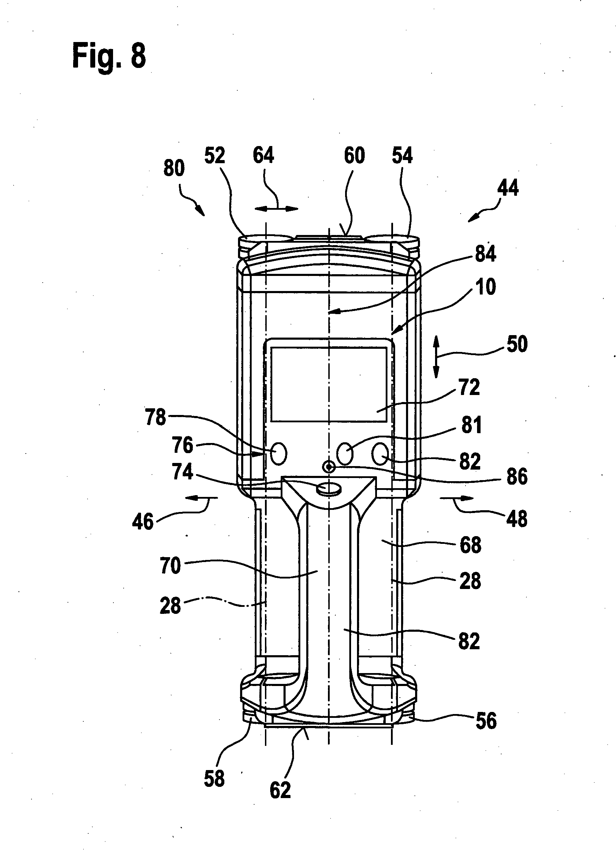

Neben der Funktion als Wickelkörper für die induktive Sensorik ist der Kunststoffkörper 12 der mechanischen Trägereinrichtung 10 zudem als Führungshilfe für Achsen 28 eines in den Figuren 1 bis 7 nicht näher dargestellten Messgeräts, insbesondere eines handgehaltenen, verfahrbaren Ortungsgeräts (siehe Figur 8) ausgebildet. Dabei können die Achsen 28 an deren Enden paarweise Wälzkörper, beispielsweise Räder, angeordnet sein können, in einem Zwischenraum 27 der umlaufenden Stege 24 geführt werden.

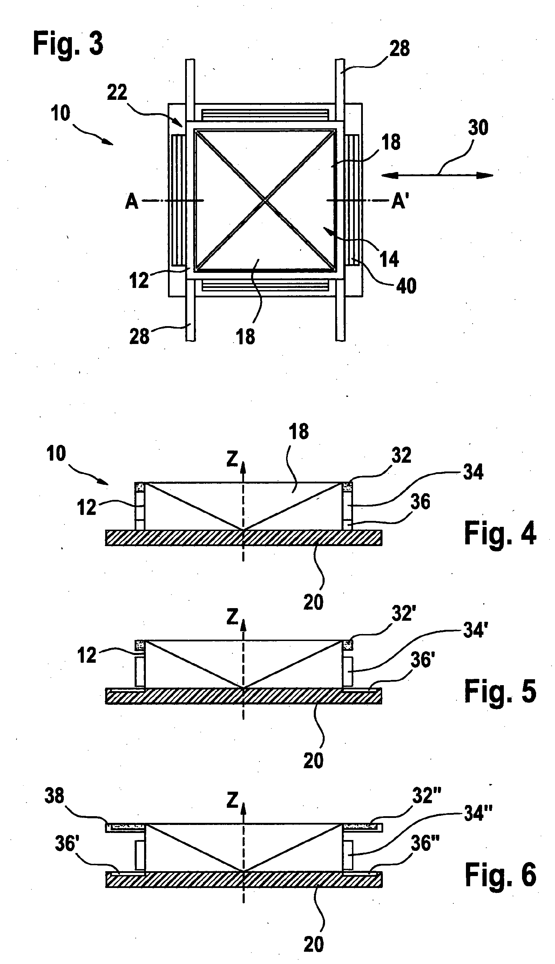

Figur 3 zeigt ein Ausführungsbeispiel der mechanischen Trägereinrichtung 10 in einer schematisierten Aufsicht. Im Innenraum 14 des Trägerkörpers 12 sind vier, im Wesentlichen eine dreieckige Form aufweisende Sensorbleche 18 angeordnet, die eine dual-polarisierte Antenne, insbesondere in Stem-Trichter-Form bilden. An der Außenseite 22 des Kunststoffkörpers 12 sind entsprechende Aufnahmen 24,26 ausgebildet, die als Wickelkörper für die Spulen einer zusätzlichen induktiven Sensorik dienen. Darüber hinaus weist der Trägerkörper 12 der mechanischen Trägereinrichtung 10 Führungselemente 26,27 für die Achsen 28 auf, mit denen sich ein Messgerät, in dem die erfindungsgemäße mechanische Trägereinrichtung 10 zum Einsatz kommt, in Richtung der Pfeile 30 verschieben lässt, beispielsweise über eine Wand verfahren lässt. Auf der Trägerplatine können zusätzliche Sensoren, wie beispielsweise ein kapazitiver Sensor angeordnet werden.

Für die Anordnung der Spulen einer induktiven Sensorik auf oder an der mechanischen Trägereinrichtung 10 gibt es verschiedene Möglichkeiten, von denen einige exemplarisch und nicht abschließend in den Figuren 4 bis 6 dargestellt sind.

Im Ausführungsbeispiel einer erfindungsgemäßen Trägereinrichtung gemäß Figur 4 ist der Trägerkörper 12 der mechanischen Trägereinrichtung 10 auf einer Trägerplatine 20 fixiert. In Umfangsrichtung des Trägerkörpers 12 sind drei Spulen 32, 34 sowie 36 in axialer Staffelung relativ zur Symmetrieachse Z der mechanischen Trägereinrichtung 10 übereinander angeordnet.

Dabei kann es sich um eine Anordnung aus zwei Sendespulen sowie einer Empfangsspule bzw. auch zweier Empfangsspulen und einer Sendespule handeln. Die Besonderheit der Anordnung dieser drei Spulen 32, 34 und 36 besteht darin, dass alle drei konzentrisch zu der gemeinsamen Achse Z angeordnet sind. Bei Verwendung zweier Sendespulen werden diese von ihren jeweiligen Sendern mit Wechselströmen entgegengesetzter Phase gespeist. Damit induziert die erste Sendespule in der Empfangsspule einen Fluss, der dem von der zweiten Sendespule in der Empfangsspule induzierten Fluss entgegengesetzt gerichtet ist. Beide in der Empfangsspule induzierten Flüsse kompensieren sich somit gegenseitig, sodass der Empfänger kein Empfangssignal in der Empfangsspule detektiert, falls sich kein externer, metallischer Gegenstand in der Nähe der Spulenanordnung befmdet. Die drei Spulen, 32, 34 sowie 36 bilden damit einen induktiven Sensor in Kompensationsschaltung.

Figur 5 zeigt ein zweites Ausführungsbeispiel für die Anordnung der Spulen am Trägerkörper 12 der mechanischen Trägereinrichtung 10. Bei dem Ausführungsbeispiel gemäß Figur 5 sind die Spulen 32' und 34' als klassische Wickelspulen ausgebildet, die Spule 36' ist jedoch als Printspule auf der Trägerplatine 20 ausgebildet. Dazu können entsprechende Leiterbahnenstrukturen, die ein Leiterschleifensystem erzeugen, beispielsweise phototechnisch auf dem Trägerelement 20 der mechanischen Trägereinrichtung 10 ausgebildet werden. Alternativ wäre es möglich, die Print-Spule 36', die auf der Trägerplatine 20 angeordnet ist, ebenfalls als Spule mit einem Luftkern bzw. Spule mit Ferritkern auszubilden und auf der Trägerplatine anzuordnen.

Figur 6 zeigt ein weiteres Ausführungsbeispiel für eine Sensoranordnung mit Hilfe der mechanischen Trägereinrichtung 10. Im Ausführungsbeispiel der Figur 6 sind die Spulen 32" sowie 36" als Printspulen ausgebildet, die Spule 34" hingegen als klassische, gewickelte Spule. Dazu weist die Ausführungsform der mechanischen Trägereinrichtung 10 gemäß Figur 6 eine zur Trägerplatine 20 in axialer Richtung der Achse Z versetzte und parallel angeordnete Zusatzplatine 38 auf, auf der die Leiterschleifen der Spule 32" in Form von Printstrukturen ausgebildet sind.

Auf der Zusatzplatine 38 befindet sich zudem hinreichend Platz für eine in Figur 6 nicht weiter dargestellte, zusätzliche kapazitive Sensorik bzw. auch für entsprechende Sensorflächen eines zusätzlichen Sensors zur Wechselspannungsdetektion. Ein AC-Sensor zur Detektion von 50/60 Hz Signalen kann sowohl auf einer der Platinen, als auch auf oder in dem Trägerkörper 12 der mechanischen Trägereinrichtung 10 integriert sein. So kann ein solcher Sensor beispielsweise über ein leitendes Element, wie einen Metallstreifen im Trägerkörper 12 integriert sein, beispielsweise in diesem eingegossen sein oder aber auch an diesem Trägerkörper angeclipst sein. In vorteilhafter Weise ist der AC-Sensor dabei ebenfalls symmetrisch zur Z-Achse der Anordnung ausgebildet. So können zwei AC-Elektroden in oder auf zwei gegenüberliegenden Seiten des Trägerkörpers 12 anbgebracht sein.

Bei allen dargestellten Ausführungsformen können die Spulen auf den Platinen prinzipiell immer als Printspulen oder aber auch als Spulen mit Luftkern oder Spulen mit Ferritkern ausgeführt sein. So ist es beispielsweise auch möglich, auf der Zusatzplatine 38 eine fertig gewickelte Spule für eine induktive Sensorik anzuordnen.

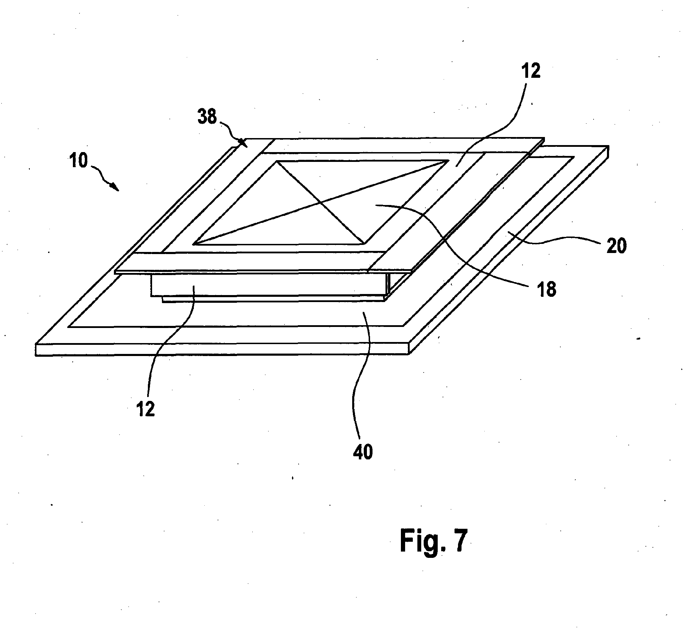

Figur 7 zeigt ein Ausführungsbeispiel der mechanischen Trägereinrichtung 10, bei dem die Trägereinrichtung zwischen zwei im Wesentlichen parallel angeordneten Platinen 20 bzw. 38 angeordnet ist. Der Trägerkörper 12, der mechanischen Trägereinrichtung 10, der beispielsweise aus einem Kunststoff bestehen kann, ist dabei wiederum als Wickelkörper für Spulen einer induktiven Sensorik ausgebildet und trägt in seinem Inneren Sensorbleche 18 einer Antennenanordnung eines Radarsensors, insbesondere einen UWB (ultra - wide-band) Radarsensors. Die Sensorbleche 18 sind Blechstanzteile können jedoch auch aus einem anderen Material mittels eines anderen Herstellungsverfahren gefertigt sein.

Auf der Trägerplatine 20 befindet sich darüber hinaus hinreichend Platz sowohl für eine kapazitive Sensorik 40, einen Wechselspannungsdetektor, als auch für weitere Spulen (Printspulen oder fertig gewickelte Spulen) der induktiven Sensorik des Messkopfes. Der Wechsespannungsdetektor kann aber beispielsweise auch in beschriebener Weise direkt in oder an dem Trägerkörper 12 angebracht sein.

Die optionale Zusatzplatine 38 wird mit dem Trägerkörper 12 der mechanischen Trägereinrichtung 10 ebenfalls fest verbunden, so dass wiederum eine genaue Positionierung und eine einfache Montage der Zusatzplatine und somit der auf ihr angeordneten zusätzlichen Sensoren ermöglicht wird.

Die Trägerplatine 20 kann über entsprechende Halteelemente, beispielsweise Rastelemente 42, wie sie in Figur 2 dargestellt sind, im Inneren des Gehäuses eines entsprechenden Messgeräts angeordnet und fixiert werden.

Figur 8 zeigt ein handgehaltenes Ortungsgerät 80 zur Detektion von in einem Medium eingeschlossenen Objekten mit einer Mehrfachsensorik, als ein Ausführungsbeispiel für ein erfindungsgemäßes Messgerät. In einem solchem Messgerät ist die Mehrfachsensorik über die erfindungsgemäße mechanische Trägereinrichtung 10 im Geräteinneren positioniert und fixiert.

Das Gehäuse 44 dieses Ortungsgeräts ist in zwei bevorzugte, entgegengesetzte Bewegungsrichtungen 46 bzw. 48 verfahrbar, die senkrecht zu einer Längserstreckung 50 des Gehäuses 44 des Messgerätes verlaufen. Das Ortungsgerät 80 besitzt vier als Räder ausgebildete Wälzkörper 52, 54, 56 und 58, die in Längserstreckung 50 des Gerätes an gegenüber liegenden Stirnseiten 60 bzw. 62, in Quererstreckung des Gerätes in dessen äußerem Bereich angeordnet sind. Die sich jeweils in Längserstreckung 50 gegenüber liegenden Wälzkörper 52 und 58 bzw. 54 und 56 sind über starre Achsen 28 drehfest miteinander verbunden, wobei die starren Achsen 28 derart durch die mechanische Trägereinrichtung 10 geführt sind, dass diese als Achsenführung für das verfahrbare Gerät 80 dient.

Zur Aufnahme von Bewegungskenngrößen weist das Ortungsgerät 80 eine Sensoreinheit mit insbesondere zwei Sensoren auf, mit denen die Bewegungskenngrößen erfassbar sind. Dazu sind auf die Achsen 28 in nicht näher dargestellter Weise Segmenträder aufgesteckt, die sich in Gabellichtschranken bewegen, so dass die Bewegungsrichtung des Gerätes detektiert werden kann.

Das Gehäuse 44 des Messgeräts 80 weist an seiner Deckseite 68 eine von einem bügelförmigen Griff 82 gebildete Halteeinrichtung 70 auf. Die Halteeinrichtung 70 verläuft in Längserstreckung 50 des Gehäuses 44. Mit Hilfe dieser Halteeinrichtung 70 und der Räder 52, 54, 56 und 58 kann das Messgerät über die Oberfläche eines zu untersuchenden Mediums, beispielsweise einer Wand, eines Bodens oder einer Decke verfahren werden.

An seinem einen, einem graphischen Display 72 zugewendetem Ende weist die Halteeinrichtung 70 ein erstes Bedienelement 74 auf, mit dem ein entsprechender Messvorgang zur Ortung eines eingeschlossenen Objektes gestartet bzw. beendet werden kann. Zwischen der Halteeinrichtung 70 und dem als graphischen Display ausgebildeten Bildschirm 72 des Geräts ist ein Tastenfeld 76 angeordnet, welches über verschiedene Messtasten 78, 81, 82 verfügt, mit denen beispielsweise unterschiedliche Sensoren der Mehrfachsensorik des Messgeräts hinzu- bzw. abgeschaltet werden können.

Die erfindungsgemäße mechanische Trägereinrichtung 10, an welcher die Mehrfachsensorik angeordnet ist, ist in dem dem Halteelement 70 abgewandten Kopfteil 84 des Messgeräts angeordnet und in Figur 8 nur schematisch gestrichelt wiedergegeben. Dabei sind die Sensorbleche 18 des Hochfrequenzsensors auf die in Figur 8 verdeckte Unterseite des Gehäuses 44 ausgerichtet, sodass die Symmetrieachse Z der mechanischen Trägereinrichtung 10, welche gleich der Abstrahlungsrichtung der Antennenanordnung ist, in die Zeichenebene der Figur 8 hinein ausgerichtet, wie dies mit dem Bezugszeichen 86 in Figur 8 angedeutet sein soll.

Das erfindungsgemäße Messgerät, insbesondere ein solches handgehaltenes Ortungsgerät zur Detektion von in einem Medium eingeschlossenen Objekten, weist eine Mehrfachsensorik, insbesondere eine Hochfrequenzsensorik, beispielsweise eine oder mehrere Radarantennen in einem Frequenzbereich zwischen ca. 1 und 5 GHz auf. Darüber hinaus besitzt das erfindungsgemäße Messgerät einen induktiven Sensor zu Ortung metallischer Gegenstände. Die Hochfrequenzsensorbleche sowie die Spulenanordnungen des induktiven Sensors werden von einer mechanischen Trägereinrichtung relativ zueinander und zudem auch insgesamt als Multisensoreinheit im Gehäuse des Messgeräts positioniert. Dabei kann die mechanische Trägereinrichtung direkt auf einer Trägerplatine des Messgerätes befestigt werden, die weitere elektronische Ansteuerelemente zum Betrieb des Messgeräts aufweist. Weitere Sensorik, wie beispielsweise kapazitive Sensoren, Netzspannungsdetektoren, die kapazitiv und passiv, d. h. ohne Erzeugung eines elektrischen Felds, das Wechselspannungsfeld einer Netzspannungsleitung erfassen können, sowie auch ein oder mehrere kapazitive Hochfrequenzdetektoren können an entsprechenden Aufnahmen der mechanischen Trägereinrichtung 10 bzw. einer zugeordneten Trägerplatine derart angeordnet werden, dass jeder Sensor dieser Mehrfachsensorik den gleichen Messort besitzt, was zu einer genaueren Aussage über das aufgefundene, detektierte Objekt führt.

Aufgrund der als Multifunktionshalter ausgebildeten mechanischen Trägereinrichtung ist ein kompaktes, servicefreundliches Messgerät mit einer mechanisch stabilen Sensoranordnung realisierbar.

Die erfindungsgemäße mechanische Trägereinrichtung sowie ein entsprechendes Messgerät, insbesondere ein Ortungsgerät mit einer erfindungsgemäßen mechanischen Trägereinrichtung sind nicht auf die in den Zeichnungen und der Beschreibung aufgeführten Ausführungsbeispiele beschränkt.

Insbesondere ist ein derartiges Messgerät nicht auf die in den Ausführungsbeispielen dargestellten unterschiedlichen Sensortypen beschränkt. Weitere Sensoren, wie beispielsweise Infrarotsensoren, Ultraschallsensoren oder dergleichen können ebenfalls an oder in der mechanischen Trägereinrichtung integriert sein.

## Patentansprüche

1. Mechanische Trägereinrichtung (10) für zumindest ein Sensorblech (18) einer Vorrichtung zum Senden und/oder Empfangen elektromagnetischer HF-Signale, mit zumindest einem als Antenne der Vorrichtung zum Senden und/oder Empfangen elektromagnetischer HF-Signale im Bereich 1 bis 5 GHz betriebenen Sensorblech, wobei die Trägereinrichtung (10) als Kuststoffkörper (12) asgeformt und als Wickelkörper (24,26) zumindest einer Spule (32,32',32"; 34,34',34"; 36,36',36") eines induktiven Sensors ausgebildet ist, wobei die Trägereinrichtung (10) im wesentlichen rohrförmig, insbesondere mit rechteckigem Querschnitt, ausgebildet ist, und dass mindestens ein Sensorblech (18) im Innenraum (14) der Trägereinrichtung und die mindestens eine Spule (32,32',32"; 34,34',34"; 36,36',36") außerhalb dieses Innenraums (14) angeordnet ist.

2. Trägereinrichtung nach Anspruch 1, **dadurch gekennzeichnet, dass** zumindest ein als Spule (32,32',32"; 34,34',34"; 36,36',36") dienendes Leitersehlelfensystem das Trägerelement (10) In Umfangsrichtung umgibt.

3. Trägereinrichtung nach Anspruch 1 oder 2, **dadurch gekennzeichnet, dass** eine Mehrzahl von als Spulen (32,32',32";34,34',34";36,36',36") dienenden Leiterschleifensystemen konzentrisch zu einer Symmetrieachse Z der Trägereinrichtung (10) angeordnet sind.

4. Trägereinrichtung nach Anspruch 3, **dadurch gekennzeichnet, dass** die Leiterschleifensysteme in axialer Richtung der Symmetrieachse Z höhenversetzt zueinander angeordnet sind.

5. Trägereinrichtung nach Anspruch 3 oder 4, **dadurch gekennzeichnet, dass** die Symmetrieachse Z der Trägereinrichtung (10) der Abstrahlungsrichtung des zumindest einen Sensorblechs (18) entspricht.

6. Trägereinrichtung nach einem der vorhergehenden Ansprüche, **dadurch gekennzeichnet, dass** die Trägereinrichtung (10) zumindest eine Aufnahme für zumindest einen weiteren Sensor, Insbesondere einen AC-Sensor aufweist.

7. Trägereinrichtung nach einem der vorhergehenden Ansprüche, **dadurch gekennzeichnet, dass** die Trägereinrichtung (10) mechanisch mit zumindest einer Trägerplatine (20,38) verbunden ist, auf der zumindest ein weiteres Element eines Sensors (40) vorgesehen ist.

8. Trägereinrichtung nach Anspruch 7, **dadurch gekennzeichnet, dass** die Trägereinrichtung (10) elektrisch mit der zumindest einen Trägerplatine (20,38) kontaktiert ist.

9. Trägereinrichtung nach einem der vorhergehenden Ansprüche, **dadurch gekennzeichnet, dass** die Trägereinrichtung (10) als Führungselement (26,27) zumindest einer Verbindungsachse (28) zweier Wälzkörper (52,54,56,58) ausgebildet ist.

10. Messgerät mit Mehrfachsensorik, insbesondere ein handgehaltenes Ortungsgerät (80) zur Detektion von in einem Medium eingeschlossenen Objekten, mit einer Vorrichtung zum Senden und / oder Empfangen elektromagnetischer HF-Signale, **dadurch gekennzeichnet, dass** das Messgerät (80) zumindest eine Trägereinrichtung (10) nach zumindest einem der Ansprüche 1 bis 9 aufweist.

11. Messgerät nach Anspruch 10, **dadurch gekennzeichnet, dass** das Messgerät über eine Mehrzahl von Wälzkörpern (52,54,56,58) verfügt, die jeweils paarweise mittels einer Achse (28) verbunden sind, wobei die Achsen (28) mittels der Trägereinrichtung (10) geführt sind.

## Claims

1. Mechanical support device (10) for at least one sensor plate (18) of a device for transmitting and/or receiving electromagnetic high frequency signals, having at least one sensor plate operated as an antenna of the device for transmitting and/or receiving electromagnetic high frequency signals in the range from 1 to 5 GHz, the support device (10) being formed as a plastic body (12) and being designed as a coil former (24, 26) of at least one coil (32, 32', 32"; 34, 34', 34"; 36, 36', 36") of an inductive sensor, the support device (10) being formed substantially tubularly, in particular with a rectangular cross section, and the at least one sensor plate (18) being arranged in the interior (14) of the support device, and the at least one coil (32, 32', 32''; 34, 34', 34''; 36, 36', 36'') being arranged outside this interior (14).

2. Support device according to Claim 1, **characterized in that** at least one conductor loop system serving as a coil (32, 32', 32''; 34, 34', 34''; 36, 36', 36'') surrounds the support element (10) in the circumferential direction.

3. Support device according to Claim 1 or 2, **characterized in that** a multiplicity of conductor loop systems serving as coils (32, 32', 32"; 34, 34', 34''; 36, 36', 36'') are arranged concentrically with respect to an axis of symmetry Z of the support device (10).

4. Support device according to Claim 3, **characterized in that** the conductor loop systems are arranged offset vertically in relation to one another in the axial direction of the axis of symmetry Z.

5. Support device according to Claim 3 or 4, **characterized in that** the axis of symmetry Z of the support device (10) corresponds to the emission direction of the at least one sensor plate (18).

6. Support device according to one of the preceding claims, **characterized in that** the support device (10) has at least one holder for at least one further sensor, in particular an AC sensor.

7. Support device according to one of the preceding claims, **characterized in that** the support device (10) is connected mechanically to at least one support circuit board (20, 38), on which at least one further element of a sensor (40) is provided.

8. Support device according to Claim 7, **characterized in that** electrical contact is made between the support device (10) and the at least one support circuit board (20, 38).

9. Support device according to one of the preceding claims, **characterized in that** the support device (10) is formed as a guide element (26, 27) of at least one connecting shaft (28) of two rolling elements (52, 54, 56, 58).

10. Measuring device having multiple sensors, in particular a hand-held location device (80) for the detection of objects enclosed in a medium, having a device for transmitting and/or receiving electromagnetic high frequency signals, **characterized in that** the measuring device (80) has at least one support device (10) according to at least one of Claims 1 to 9.

11. Measuring device according to Claim 10, **characterized in that** the measuring device has multiple rolling elements (52, 54, 56, 58), which are respectively connected in pairs by means of a shaft (28), the shafts (28) being guided by means of the support device (10).

## Revendications

1. Dispositif porteur mécanique (10) pour au moins une tôle de détection (18) d'un appareil pour émettre et/ou recevoir des signaux HF électromagnétiques, comprenant au moins une tôle de détection exploitée en tant qu'antenne de l'appareil pour émettre et/ou recevoir des signaux HF électromagnétiques dans la plage de 1 à 5 GHz, le dispositif porteur (10) étant façonné sous la forme d'un corps en matière plastique (12) et réalisé en tant que corps de bobinage (24, 26) d'au moins une bobine (32, 32', 32''; 34, 34', 34''; 36, 36', 36") d'un capteur inductif, le dispositif porteur (10) étant configuré pour l'essentiel en forme de tube, notamment avec une section transversale rectangulaire, et l'au moins une tôle de détection (18) étant disposée dans l'espace intérieur (14) du dispositif porteur et l'au moins une bobine (32, 32', 32''; 34, 34', 34''; 36, 36', 36") à l'extérieur de cet espace intérieur (14).

2. Dispositif porteur selon la revendication 1, **caractérisé en ce qu'**au moins un système de boucle conductrice servant de bobine (32, 32', 32''; 34, 34', 34''; 36, 36', 36") entoure l'élément porteur (10) dans le sens périphérique.

3. Dispositif porteur selon la revendication 1 ou 2, **caractérisé en ce qu'**une pluralité de systèmes de boucle conductrice servant de bobines (32, 32', 32''; 34, 34' , 34''; 36, 36' , 36'') sont disposés de manière concentrique par rapport à un axe de symétrie Z du dispositif porteur (10).

4. Dispositif porteur selon la revendication 3, **caractérisé en ce que** les systèmes de boucle conductrice sont disposés décalés en hauteur les uns par rapport aux autres dans le sens axial de l'axe de symétrie Z.

5. Dispositif porteur selon la revendication 3 ou 4, **caractérisé en ce que** l'axe de symétrie Z du dispositif porteur (10) correspond au sens de rayonnement de l'au moins une tôle de détection (18).

6. Dispositif porteur selon l'une des revendications précédentes, **caractérisé en ce que** le dispositif porteur (10) présente au moins un logement pour au moins un capteur supplémentaire, notamment un capteur AC.

7. Dispositif porteur selon l'une des revendications précédentes, **caractérisé en ce que** le dispositif porteur (10) est relié mécaniquement avec au moins une platine porteuse (20, 38) sur laquelle est prévu au moins un élément supplémentaire d'un capteur (40).

8. Dispositif porteur selon la revendication 7, **caractérisé en ce que** le dispositif porteur (10) est mis en contact électrique avec l'au moins une platine porteuse (20, 38).

9. Dispositif porteur selon l'une des revendications précédentes, **caractérisé en ce que** le dispositif porteur (10) est réalisé en tant qu'élément de guidage (26, 27) d'au moins un axe de liaison (28) de deux organes roulants (52, 54, 56, 58).

10. Appareil de mesure muni d'un système de détection multiple, notamment appareil de localisation portatif (80) pour la détection d'objets inclus dans un fluide, comprenant un appareil pour émettre et/ou recevoir des signaux HF électromagnétiques, **caractérisé en ce que** l'appareil de mesure (80) présente au moins un dispositif porteur (10) selon au moins l'une des revendications 1 à 9.

11. Appareil de mesure selon la revendication 10, **caractérisé en ce que** l'appareil de mesure dispose d'une pluralité d'organes roulants (52, 54, 56, 58) qui sont respectivement reliés par paires au moyen d'un axe (28), les axes (28) étant guidés au moyen du dispositif porteur (10).
